# EUROPEAN PATENT SPECIFICATION

(11) **EP 3 663 576 B1**
(45) Date of publication and mention of the grant of the patent: **26.07.2023**
(21) Application number: 18211111.2
(22) Date of filing: 07.12.2018
(51) Int. Cl.: F03D 80/80, F03D 80/60

(54) **A WIND TURBINE NACELLE COOLING SYSTEM**
WINDTURBINENGONDELKÜHLSYSTEM
SYSTÈME DE REFROIDISSEMENT DE NACELLE DE TURBINE ÉOLIENNE

(43) Date of publication of application: 10.06.2020
(73) Proprietor: Nissens Cooling Solutions A/S, 8700 Horsens (DK)
(72) Inventor: JENSEN, Mikkel, 8700 Horsens (DK); MØRKHOLT, Morten, DK-8700 Horsens (DK)
(74) Representative: Dragsted Partners A/S

(56) References cited:
- WO-A1-2014/037080
- JP-A- 2013 167 229
- JP-A- 2013 179 769
- JP-B2- 3 989 693
- US-A1- 2006 113 804
- US-A1- 2012 063 890
- US-A1- 2012 086 215

## Description

The present invention relates to a wind turbine nacelle mounted cooling system configured to be mounted on a first face of a nacelle of a wind turbine, the nacelle being rotably connected with a tower so that the nacelle is positioned in relation to a wind direction, the first face having a longitudinal extension substantially corresponding to the wind direction.

A wind turbine converts wind power into electrical energy by using a generator placed among other components in the nacelle of the wind turbine. When the generator converts energy, the air surrounding the components is heated, and the components themselves are thus also heated.

When the components are heated, the efficiency with which the conversion occurs is substantially decreased. In order to cool the components, the walls and the air surrounding the components are cooled down by means of a cooling device positioned on top of the nacelle. Thus, the cool outside air passes through the cooling device and cools a cooling fluid within the cooling device, which is subsequently used to cool the walls of the components in the nacelle or the air surrounding the components.

Since the sizes and yield of the wind turbines increases, the cooling need increases as well, which influences on the sizes of the cooling devices to be positioned on the nacelles. Even though the sizes of the nacelle increase as well, it may be difficult to provide cooling devices having sufficient cooling capacity on the nacelles. Examples of prior art solutions are available in documents WO 2014/037080 A1, JP 3 989693 B2, JP 2013 167229 A, US 2012/063890 A and US 2012/086215 A1.

It is an object of the present invention to wholly or partly overcome the above disadvantages and drawbacks of the prior art. More specifically, it is an object to provide an improved wind turbine nacelle mounted cooling system according to claim 1 having enhanced cooling effect.

The above objects, together with numerous other objects, advantages and features, which will become evident from the below description, are accomplished by a solution in accordance with the present invention by a wind turbine nacelle mounted cooling system configured to be mounted on a first face of a nacelle of a wind turbine, the nacelle being rotably connected with a tower so that the nacelle is positioned in relation to a wind direction, the first face having a longitudinal extension substantially corresponding to the wind direction, the cooling system comprising:
a projected wind area when in operation extending substantially in a perpendicular direction from the first face, the projected wind area is defined by at least a first cooling module having a first cooling area,
wherein at least a part of the first cooling area is arranged with an angle different from 90 degrees in relation to the longitudinal extension of the first face of the nacelle.

Also, the entire first cooling area may be arranged with an angle different from 90 degrees in relation to the longitudinal extension.

Moreover, the first face may have a transverse extension being perpendicular to the longitudinal extension, the cooling system comprising a second cooling module having a second cooling area, the first cooling module and the second cooling module being arranged adjacent to each other in the transverse extension.

Further, the second cooling area may be arranged with an angle different from 90 degrees in relation to the longitudinal extension of the first face of the nacelle.

Additionally, the first cooling area and the second cooling area may have an effective cooling area, the effective cooling area being larger than the projected wind area.

Furthermore, the effective cooling area may be 3% larger than the projected wind area, preferably 5% larger than the projected wind area, more preferably 10% larger than the projected wind area, most preferably more than 15% larger than the projected wind area

In addition, the angle may be different from a plane being perpendicular to the longitudinal extension of the first face of the nacelle with between 2 to 88 degrees, preferably between 5 to 75 degrees, more preferably between 10 to 65 degrees. Most preferably between 15 to 55 degrees.

Moreover, the angle of the first cooling area and the angle of the second cooling area may define a mutual angle between the first cooling area and the second cooling area.

Also, the first cooling area and the second cooling area when being angled may define a V when seen from above.

Further, a plurality of cooling modules may be arranged adjacent to each other in the transverse extension of the first face.

Additionally, each cooling module may have a cooling area, each cooling area having an angle different from 90 degrees in relation to the longitudinal extension of the first face of the nacelle.

Furthermore, the plurality of cooling modules may define a zig-zag pattern when seen from above.

In addition, the first cooling area may have a different angle in relation to the second cooling area.

Moreover, all cooling areas of the cooling modules may have different angles in relation to the longitudinal extension of the first face.

Also, the first cooling module and the second cooling module may each be connected with the first face.

Further, two adjacent cooling modules may be connected to each other by one or more connection parts.

Additionally, a space may be created between two adjacent cooling modules, wherein an additional cooling module is arranged in the space.

In addition, each cooling module may be connected with a cooling circuit configured to circulate a cooling medium so that the cooling medium may flow in the cooling module and the cooling circuit.

Moreover, the cooling system may be a passive cooling system.

Furthermore, the angle of the cooling area may be adjusted under operation.

Also, the angle of the cooling area may be different along the cooling area.

Further, the first cooling area may have a curved extension, the curved extension having a plurality of tangent lines along the curved extension, each tangent line defining an angle being different from 90 degrees in relation to the longitudinal extension of the first face of the nacelle.

Finally, the present invention also relates to a wind turbine having a cooling system.

The invention and its many advantages will be described in more detail below with reference to the accompanying schematic drawings, which for the purpose of illustration show some non-limiting embodiments and in which:
Fig. 1 shows a wind turbine with a wind turbine nacelle mounted cooling system according to the invention,
Fig. 2a shows a projected wind area of the cooling system,
Fig. 2b shows a cooling system positioned on the first face of the nacelle,
Fig. 3 shows a cooling system positioned on the first face of the nacelle,
Figs. 4-5 show another cooling system positioned on the first face of the nacelle,
Figs. 6-7 show an additional cooling system positioned on the first face of the nacelle,
Figs. 8-12 show different configurations of the cooling system, and
Figs. 13-15 show yet another cooling system positioned on the first face of the nacelle.

All the figures are highly schematic and not necessarily to scale, and they show only those parts which are necessary in order to elucidate the invention, other parts being omitted or merely suggested.

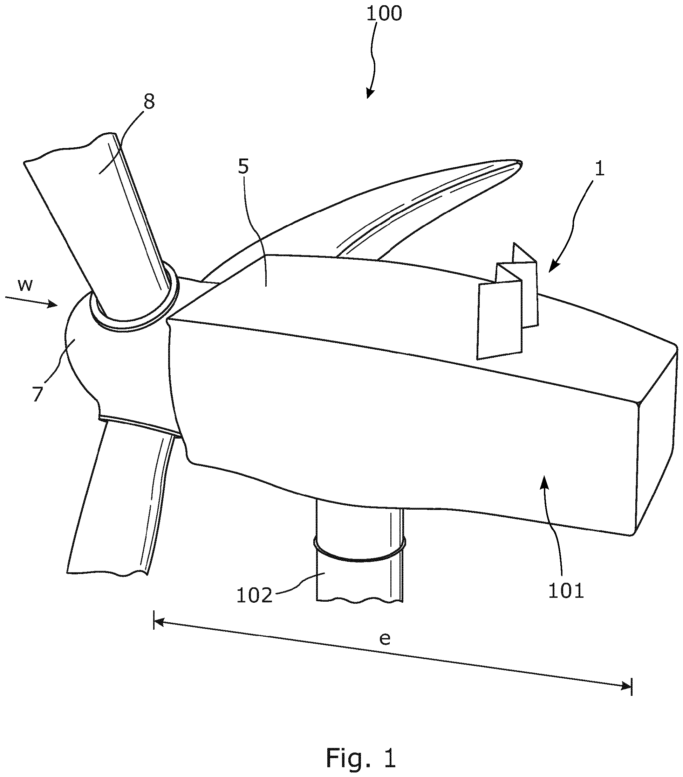

Fig. 1 shows a perspective view of a wind turbine 100 comprising a nacelle 101 and a wind turbine nacelle mounted cooling system 1. The nacelle 101 is situated on top of a tower 102 and has a front facing a hub 7 in which a plurality of rotor blades 8, normally three blades, are fastened. The nacelle 101 is rotably connected with the tower 102, so that the nacelle may be positioned in relation to a wind direction W. The wind direction W corresponds to the wind direction of the ambient passive wind. The nacelle 101 may house a generator and other components used for driving the conversion process of wind energy to electricity - also called the drive train. When producing electricity, the drive train produces a lot of heat, resulting in a less effective conversion process.

In order to cool the components and other parts of the nacelle, the wind turbine nacelle mounted cooling system 1 is configured to be mounted on a first face 5 of the nacelle 101 of the wind turbine 100. The first face 5 has a longitudinal extension e substantially corresponding to the wind direction W.

In the present embodiment, the first face 5 corresponds to a top face of the nacelle. In another embodiment, the first face may be one of the side faces of the nacelle. In addition, the wind turbine nacelle mounted cooling system may be mounted on one or more of the top and/or side faces of the nacelle 101.

Ambient passive wind flowing along the longitudinal extension e of the first face 5 of the nacelle 101 flows in through at least one cooling area of the cooling system 1 and cools a fluid within the cooling system circulating through the cooling area. The cooled fluid exchanges heat with the parts of the nacelle 101 or equipment to be cooled. The cooling system 1 may be placed in front of, in the middle of or in the back of the nacelle 101, and as mentioned both on the top face and/or on the side faces.

The present invention will mainly be described in connection with an upwind wind turbine, i.e. a wind turbine where the nacelle 101 is placed downwind from the wind turbine blades 8. However, the invention may also advantageously be implemented in a downwind wind turbine, i.e. a wind turbine where the nacelle 101 is placed upwind from the wind turbine blades 8.

The present invention is mainly described with the cooling system being a passive cooling system. However, the present invention may also be used in connection with an active cooling system.

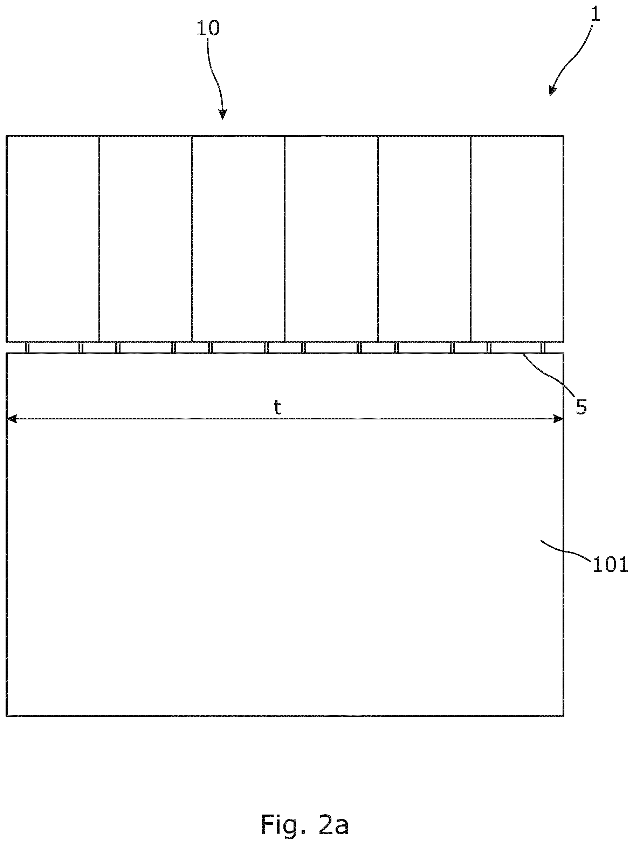

The cooling system 1 has a projected wind area 10 when in operation extending substantially in a perpendicular direction from the first face 5, the projected wind area 10 being defined by at least a first cooling module having a first cooling area. In Fig. 2a, the projected wind area 10 is shown; in the present embodiment, the cooling system 1 comprises six cooling modules arranged adjacent to each other along a transverse extension t of the first face 5. The six cooling modules define a two-dimensional area by projecting its shape on to an arbitrary plane as seen in Fig. 2a. In the prior art solutions, the projected wind area 10 of the cooling system 1 corresponds to the effective cooling area of the cooling system.

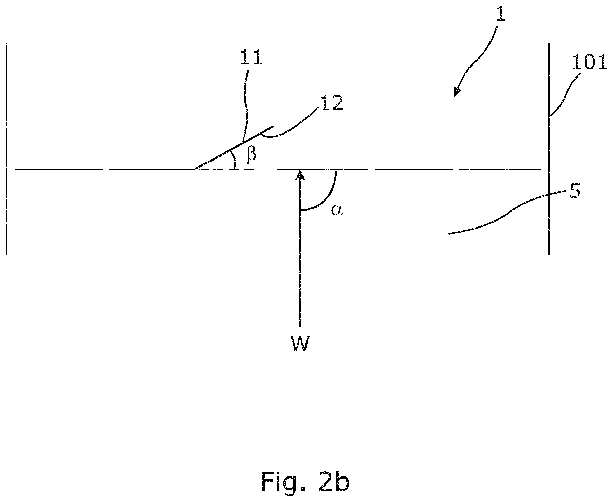

According to the invention, the projected wind area 10 is defined by at least a first cooling module 11 having a first cooling area 12. In Fig. 2b, the wind turbine nacelle mounted cooling system 1 is shown in a top view. The wind direction W substantially corresponds to the longitudinal extension of the first face 5. Normally, the cooling system extends perpendicular to the wind direction W so that the cooling area of the cooling system extends 90 degrees to the wind direction W as indicated by an angle α in Fig. 2b. At least a part of the first cooling area 12 is arranged with an angle β different from 90 degrees in relation to the longitudinal extension e, i.e. the wind direction W, of the first face 5 of the nacelle 101 as shown in Fig. 2b. In Fig. 2b, the entire first cooling area 12 is arranged with an angle different from 90 degrees in relation to the longitudinal extension e, i.e. the wind direction W.

By angling the first cooling area 12, the effective cooling area of the cooling system 1 is larger than the projected wind area 10, and thereby the cooling system provides enhanced cooling efficiency. In addition, it may be possible to have additional cooling modules positioned on the first face 5 when one or more of the cooling areas of the cooling modules are angled compared to if the cooling modules were positioned as in the prior art solutions.

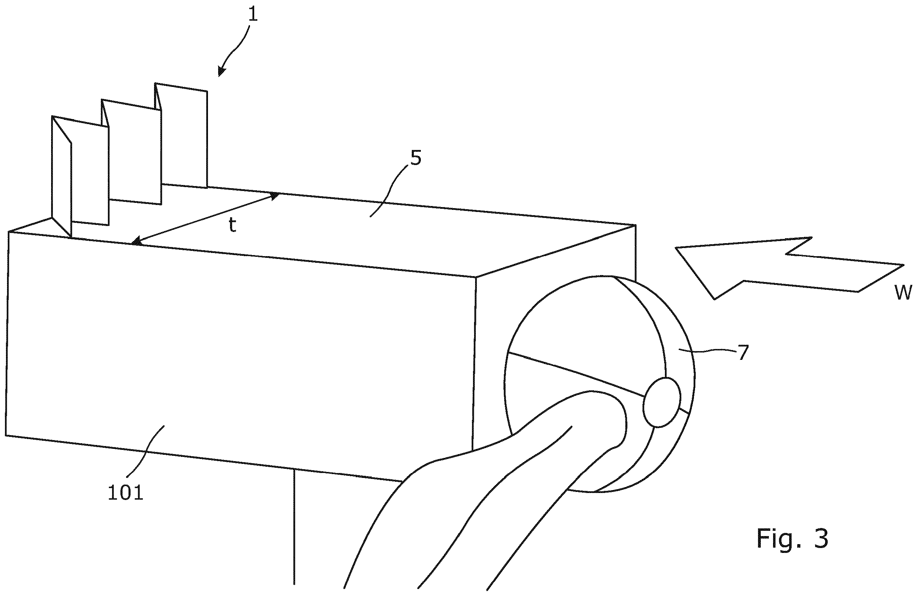

Fig. 3 shows an embodiment of the wind turbine nacelle mounted cooling system 1 arranged on the first face 5 of the nacelle 101. The cooling system 1 is arranged at the end of the nacelle being opposite the hub 7. In the present embodiment, a plurality of cooling modules are arranged adjacent to each other in the transverse extension t of the first face 5. Each cooling module has a cooling area, each cooling area having an angle different from 90 degrees in relation to the longitudinal extension e, i.e. wind direction W, of the first face 5 of the nacelle 101. In the present embodiment, there are six cooling modules arranged adjacent to each other so that two adjacent cooling modules form a V. By angling all cooling areas, it is possible to have an additional cooling module in the transverse extension t compared to the known solutions, whereby the effective cooling area of the cooling system is larger than the projected wind area 10.

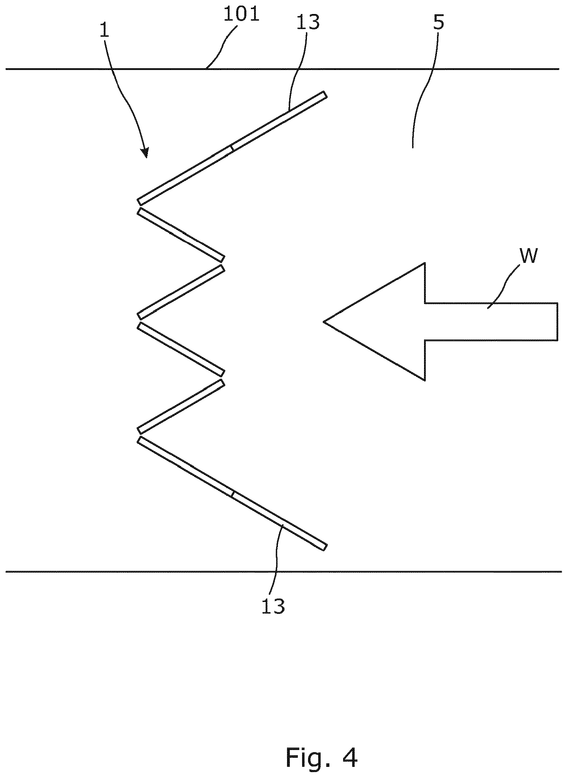

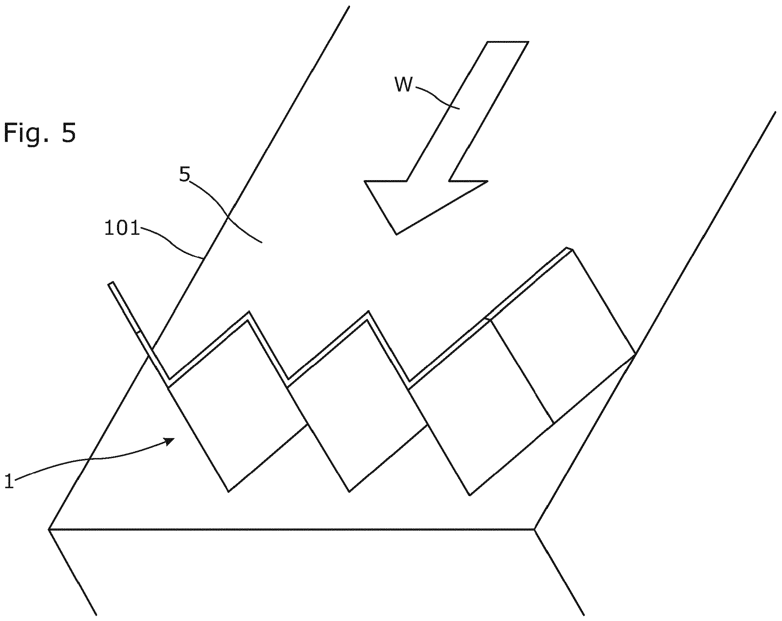

Figs. 4 and 5 show another embodiment of the wind turbine nacelle mounted cooling system 1 arranged on the first face 5 of the nacelle 101. In Fig. 4, the cooling system 1 is shown in a top view and in Fig. 5 in a perspective view. The present embodiment is similar to the embodiment described in relation to Fig. 3. However, in addition to the six cooling modules all having cooling areas being angled in relation to the wind direction W, two additional cooling modules 13 are arranged in the prolongation of the outermost cooling modules. The two additional cooling modules 13 are extending towards the wind direction W with an angle different from 90 degrees in relation to the wind direction.

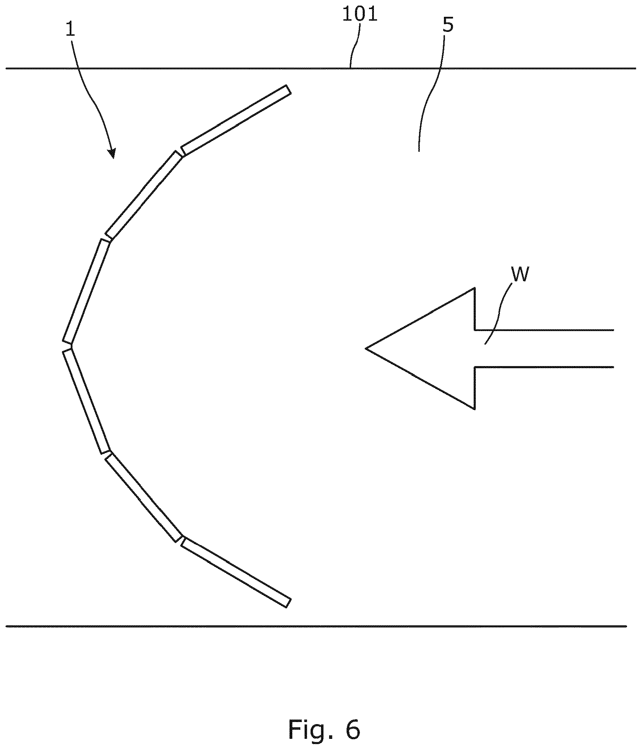

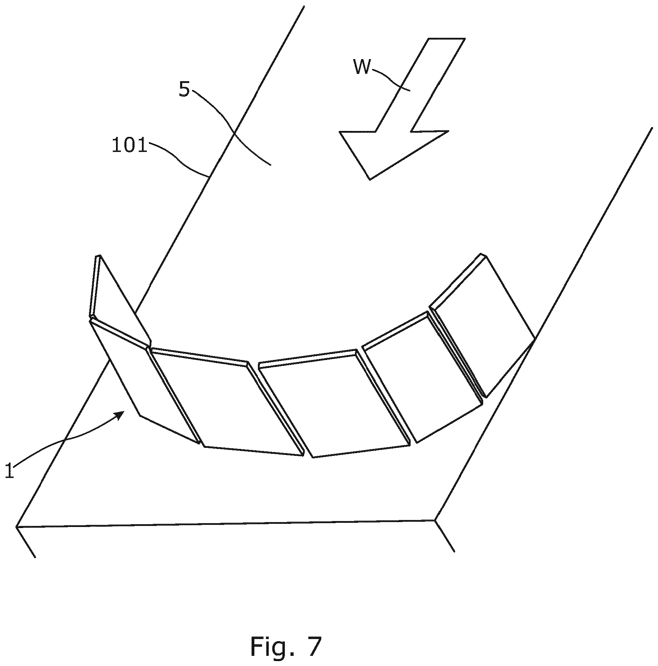

Figs. 6 and 7 show another embodiment of the wind turbine nacelle mounted cooling system 1 arranged on the first face 5 of the nacelle 101. In Fig. 6, the cooling system 1 is shown in a top view and in Fig. 7 in a perspective view. In the present embodiment, the wind turbine nacelle mounted cooling system 1 comprises six cooling modules arranged adjacent to each other. The cooling modules are arranged so as to substantially provide a semi-circle as seen in Fig. 6.

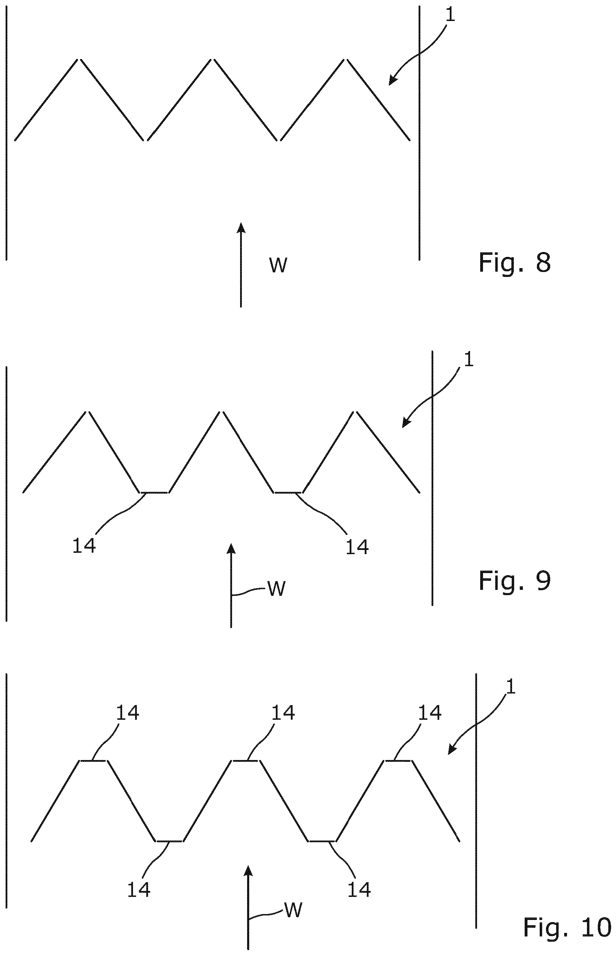

Figs. 8-12 show different configurations of the cooling system 1 in a top view. Fig. 8 is similar to the embodiment shown in Fig. 3, wherein six cooling modules are arranged adjacent to each other so that two adjacent cooling modules form a V. The six cooling modules define a zig-zag pattern when seen from above.

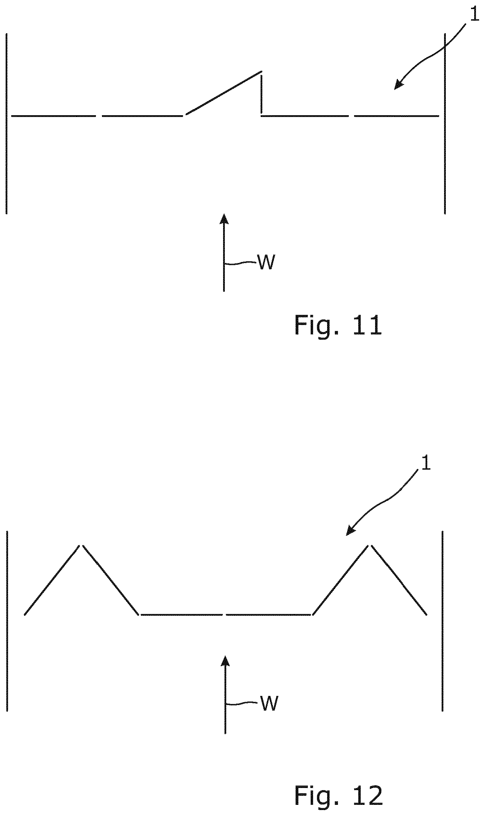

In Figs. 9 and 10, two different configurations are shown. In Fig. 9, two additional cooling modules 14 are arranged between the V configurations shown in Fig. 8. The additional cooling modules 14 have a smaller cooling area than the adjacent cooling modules. In Fig. 10, five additional cooling modules 14 have been arranged between the angled cooling modules. Fig. 11 substantially corresponds to the embodiment described in connection with Fig. 2b. In Fig. 12, yet another configuration is shown where two cooling modules have been arranged between two sets of angled cooling modules.

As indicated, many configurations are feasible by the inventive idea in angling one or more cooling areas of one or more cooling modules. By activating the longitudinal extension of the first face 5, it is possible to enhance the effective cooling areas of the cooling modules compared to the known solutions wherein the cooling modules are arranged adjacent to each other in the transverse extension of the first face with an angle being 90 degrees to the longitudinal extension, i.e. wind direction W, of the first face. Furthermore, it is obtained that standard cooling modules having predetermined sizes may be used, and at least one more cooling module may be arranged on the first face 5 by using both the longitudinal and transverse extensions of the first face.

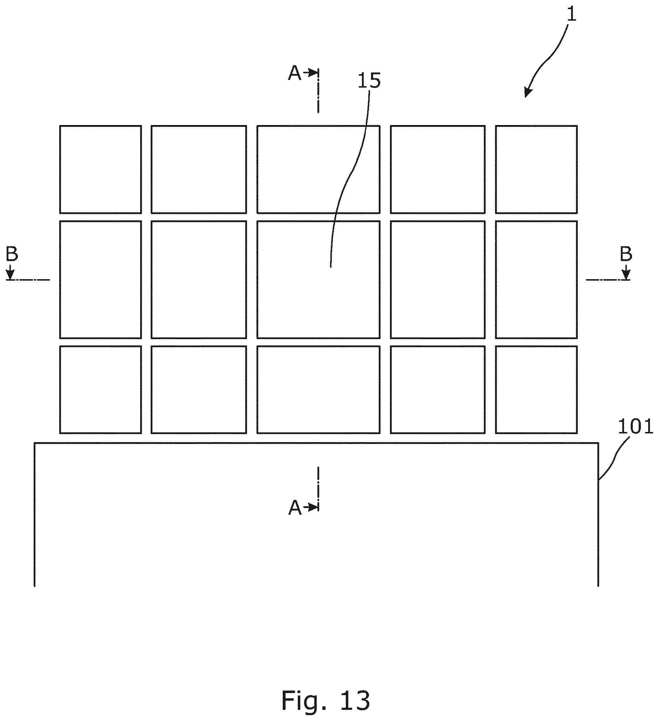

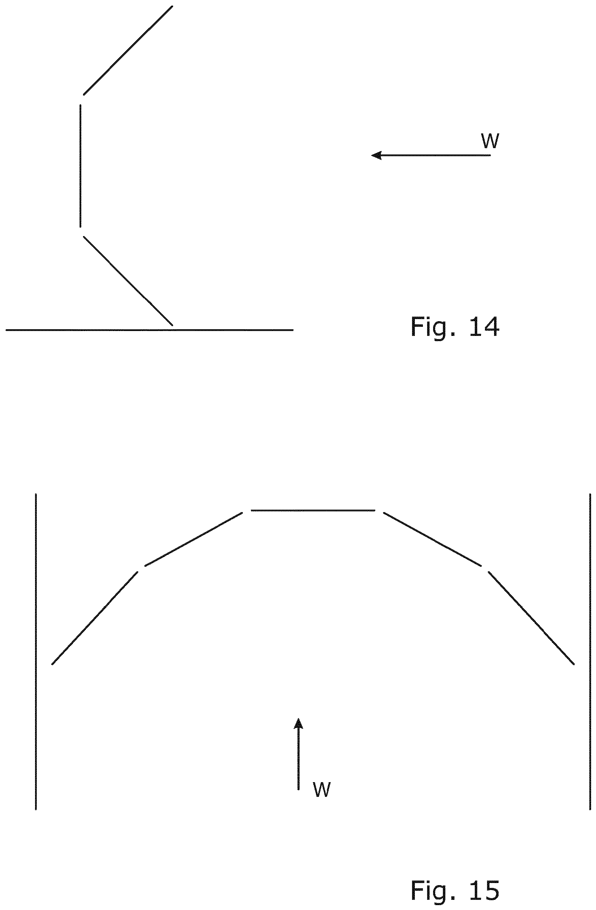

Figs. 13-15 show another embodiment of the wind turbine nacelle mounted cooling system 1. In the present embodiment, the cooling system 1 has partly the form as a satellite dish. In the present embodiment, the cooling system 1 comprises 15 cooling modules, each having a cooling area. All cooling areas have an angle being different from 90 degrees in relation to the wind direction, except a cooling area 15. In Fig. 13, the projected wind area 10 of the cooling system 1 is shown. In Fig. 14, a cross-sectional view is shown along the A-A line in Fig. 13, and in Fig. 15 a cross-sectional view is shown along the B-B line in Fig. 13. Fig. 14 shows in a side view the satellite dish, and Fig. 15 shows in a top view the satellite dish.

The first cooling area may have a curved extension, the curved extension having a plurality of tangent lines along the curved extension, each tangent line defining an angle being different from 90 degrees in relation to the longitudinal extension e of the first face 5 of the nacelle 101. In addition, the first cooling area may have a double curved extension.

The first cooling module and the second cooling module may each be connected with the first face 5. Furthermore, two adjacent cooling modules may be connected to each other by one or more connection parts. Each cooling module may be connected with a cooling circuit configured to circulate a cooling medium so that the cooling medium may flow in the cooling module and the cooling circuit. The different cooling modules may be fluidly connected with each other.

### Computational fluid dynamics (CFD) simulation

A CFD simulation has been performed wherein two different configurations of a cooling system according to the present invention have been compared to a known cooling system.

The known cooling system is a standard configuration of cooling modules arranged adjacent to each other in a transverse direction of the nacelle. Each cooling module has a cooling area arranged perpendicular to the wind direction. Hence, the effective cooling area of the standard configuration is equal to the projected wind area 10. The standard configuration had 264.2 KW in cooling effect.

The first simulation configuration had a configuration substantially similar to the embodiment shown in Fig. 4 according to the invention. The first simulation configuration had 344 KW in cooling effect.

The second simulation configuration had a configuration substantially similar to the embodiment shown in Fig. 3 according to the invention. The second simulation configuration had 333 KW in cooling effect.

Thus, the standard configuration and the first and second analysis configurations had substantially the same projected wind area. However, the first and second simulation configurations had a considerably larger effective cooling area compared to the standard configuration.

Hence, the first simulation configuration had approximately a 30% increase in effective cooling area compared to the standard configuration, and the second simulation configuration had approximately a 26% increase in effective cooling area compared to the standard configuration.

Accordingly, by applying the present invention it was possible to increase the effective cooling area considerably compared to the standard configuration.

The scope of protection is defined by the appended claims.

## Claims

1. A wind turbine nacelle (101) mounted cooling system (1) configured to be mounted on a first face (5) of a nacelle (101) of a wind turbine (100), the nacelle (101) being rotably connected with a tower (102) so that the nacelle (101) is positioned in relation to a wind direction (W), the first face (5) having a longitudinal extension substantially corresponding to the wind direction (W), the cooling system (1) comprising:
a projected wind area (10) when in operation extending substantially in a perpendicular direction from the first face (5), the projected wind area (10) is defined by at least a first cooling module (11) having a first cooling area (12),
**characterised in that** at least a part of the first cooling area (12) is arranged with an angle (β) different from 90 degrees in relation to the longitudinal extension of the first face (5) of the nacelle (101), and
**in that** the first face (5) has a transverse extension (t) being perpendicular to the longitudinal extension, the cooling system (1) comprises a second cooling module (14) having a second cooling area, the first cooling module (11) and the second cooling module (14) being arranged adjacent to each other in the transverse extension (t), where the first cooling area (11) and the second cooling area define a V when seen from above.

2. A wind turbine nacelle (101) mounted cooling system (1) according to claim 1, wherein the second cooling area is arranged with an angle different from 90 degrees in relation to the longitudinal extension of the first face (5) of the nacelle (101).

3. A wind turbine nacelle (101) mounted cooling system (1) according to claim 1 and/or 2, wherein the first cooling area (12) and the second cooling area have an effective cooling area, the effective cooling area being larger than the projected wind area (10).

4. A wind turbine nacelle (101) mounted cooling system (1) according to claim 3, wherein the effective cooling area is 3% larger than the projected wind area (10), preferably 5% larger than the projected wind area (10), more preferably 10% larger than the projected wind area (10), most preferably more than 15% larger than the projected wind area (10).

5. A wind turbine nacelle (101) mounted cooling system (1) according to any of the preceding claims, wherein the angle (β) is different from a plane being perpendicular to the longitudinal extension of the first face (5) of the nacelle (101) with between 2 to 88 degrees, preferably between 5 to 75 degrees, more preferably between 10 to 65 degrees. Most preferably between 15 to 55 degrees.

6. A wind turbine nacelle (101) mounted cooling system (1) according to claim 2, wherein the angle of the first cooling area (12) and the angle of the second cooling area define a mutual angle between the first cooling area (12) and the second cooling area.

7. A wind turbine nacelle (101) mounted cooling system (1) according to any of the preceding claims, wherein a plurality of cooling modules (14) are arranged adjacent to each other in the transverse extension of the first face (5).

8. A wind turbine nacelle (101) mounted cooling system (1) according to claim 6, wherein each cooling module (14) has a cooling area, each cooling area having an angle (β) different from 90 degrees in relation to the longitudinal extension of the first face (5) of the nacelle (101).

9. A wind turbine nacelle (101) mounted cooling system (1) according to any of the preceding claims, wherein a space is created between two adjacent cooling modules (11,14), wherein an additional cooling module (14) is arranged in the space.

10. A wind turbine nacelle (101) mounted cooling system (1) according to any of the preceding claims, wherein each cooling module (11,14) is connected with a cooling circuit configured to circulate a cooling medium so that the cooling medium may flow in the cooling module (11,14) and the cooling circuit.

11. A wind turbine nacelle (101) mounted cooling system (1) according to any of the preceding claims, wherein the cooling system (1) is a passive cooling system (1).

12. A wind turbine nacelle (101) mounted cooling system (1) according to any of the preceding claims, wherein the angle (β) of the cooling area can be adjusted under operation.

13. A wind turbine nacelle (101) mounted cooling system (1) according to any of the preceding claims, wherein the first cooling area (12) has a curved extension, the curved extension having a plurality of tangent lines along the curved extension, each tangent line defining an angle being different from 90 degrees in relation to the longitudinal extension of the first face (5) of the nacelle (101).

14. A wind turbine having a cooling system (1) according to any of the preceding claims.

## Patentansprüche

1. An einer Windturbinengondel (101) angebrachtes Kühlsystem (1), das dazu ausgebildet ist, an einer ersten Fläche (5) einer Gondel (101) einer Windturbine (100) angebracht zu werden, wobei die Gondel (101) drehbar mit einem Turm (102) verbunden ist, so dass die Gondel (101) bezüglich einer Windrichtung (W) positioniert ist, wobei die erste Fläche (5) eine Längserstreckung aufweist, die im Wesentlichen der Windrichtung (W) entspricht, wobei das Kühlsystem (1) aufweist:
einen projizierten Windbereich (10), der sich im Betrieb im Wesentlichen in einer senkrechten Richtung von der ersten Fläche (5) erstreckt, wobei der projizierte Windbereich (10) durch zumindest ein erstes Kühlmodul (11) definiert ist, das einen ersten Kühlbereich (12) aufweist,
**dadurch gekennzeichnet, dass** zumindest ein Teil des ersten Kühlbereichs (12) unter einem von 90 Grad verschiedenen Winkel (β) bezüglich der Längserstreckung der ersten Fläche (5) der Gondel (101) angeordnet ist, und dass
die erste Fläche (5) eine Quererstreckung (t) aufweist, die zu der Längserstreckung senkrecht verläuft, wobei das Kühlsystem (1) ein zweites Kühlmodul (14) aufweist, das einen zweiten Kühlbereich aufweist, wobei das erste Kühlmodul (11) und das zweite Kühlmodul (14) in der Quererstreckung (t) benachbart zueinander angeordnet sind, wobei der erste Kühlbereich (11) und der zweite Kühlbereich von oben gesehen ein V definieren.

2. An einer Windturbinengondel (101) angebrachtes Kühlsystem (1) nach Anspruch 1, wobei der zweite Kühlbereich unter einem von 90 Grad verschiedenen Winkel bezüglich der Längserstreckung der ersten Fläche (5) der Gondel (101) angeordnet ist.

3. An einer Windturbinengondel (101) angebrachtes Kühlsystem (1) nach Anspruch 1 und/oder 2, wobei der erste Kühlbereich (12) und der zweite Kühlbereich einen effektiven Kühlbereich aufweisen, wobei der effektive Kühlbereich größer ist als der projizierte Windbereich (10).

4. An einer Windturbinengondel (101) angebrachtes Kühlsystem (1) nach Anspruch 3, wobei der effektive Kühlbereich 3% größer ist als der projizierte Windbereich (10), vorzugsweise 5% größer als der projizierte Windbereich (10), noch bevorzugter 10% größer als der projizierte Windbereich (10), am bevorzugtesten mehr als 15% größer als der projizierte Windbereich (10).

5. An einer Windturbinengondel (101) angebrachtes Kühlsystem (1) nach irgendeinem der vorhergehenden Ansprüche, wobei der Winkel (β) von einer Ebene, die senkrecht zu der Längserstreckung der ersten Fläche (5) der Gondel (101) verläuft, mit zwischen 2 bis 88 Grad, vorzugsweise zwischen 5 bis 75 Grad, bevorzugter zwischen 10 bis 65 Grad, am bevorzugtesten zwischen 15 bis 55 Grad, verschieden ist.

6. An einer Windturbinengondel (101) angebrachtes Kühlsystem (1) nach Anspruch 2, wobei der Winkel des ersten Kühlbereichs (12) und der Winkel des zweiten Kühlbereichs einen Wechselwinkel zwischen dem ersten Kühlbereich (12) und dem zweiten Kühlbereich definieren.

7. An einer Windturbinengondel (101) angebrachtes Kühlsystem (1) nach irgendeinem der vorhergehenden Ansprüche, wobei eine Mehrzahl von Kühlmodulen (14) in der Quererstreckung der ersten Fläche (5) benachbart zueinander angeordnet sind.

8. An einer Windturbinengondel (101) angebrachtes Kühlsystem (1) nach Anspruch 6, wobei jedes Kühlmodul (14) einen Kühlbereich aufweist, wobei jeder Kühlbereich einen von 90 Grad verschiedenen Winkel (β) bezüglich der Längserstreckung der ersten Fläche (5) der Gondel (101) aufweist.

9. An einer Windturbinengondel (101) angebrachtes Kühlsystem (1) nach irgendeinem der vorhergehenden Ansprüche, wobei zwischen zwei benachbarten Kühlmodulen (11, 14) ein Raum geschaffen ist, wobei ein zusätzliches Kühlmodul (14) in dem Raum angeordnet ist.

10. An einer Windturbinengondel (101) angebrachtes Kühlsystem (1) nach irgendeinem der vorhergehenden Ansprüche, wobei jedes Kühlmodul (11,14) mit einem Kühlkreislauf verbunden ist, der dazu ausgebildet ist, ein Kühlmedium zu zirkulieren, so dass das Kühlmedium in dem Kühlmodul (11, 14) und dem Kühlkreislauf strömen kann.

11. An einer Windturbinengondel (101) angebrachtes Kühlsystem (1) nach irgendeinem der vorhergehenden Ansprüche, wobei das Kühlsystem (1) ein passives Kühlsystem (1) ist.

12. An einer Windturbinengondel (101) angebrachtes Kühlsystem (1) nach irgendeinem der vorhergehenden Ansprüche, wobei der Winkel (β) des Kühlbereichs im Betrieb eingestellt werden kann.

13. An einer Windturbinengondel (101) angebrachtes Kühlsystem (1) nach irgendeinem der vorhergehenden Ansprüche, wobei der erste Kühlbereich (12) eine gekrümmte Erstreckung aufweist, wobei die gekrümmte Erstreckung eine Mehrzahl von Tangentenlinien entlang der gekrümmten Erstreckung aufweist, wobei jede Tangentenlinie einen von 90 Grad verschiedenen Winkel bezüglich der Längserstreckung der ersten Fläche (5) der Gondel (101) definiert.

14. Windturbine mit einem Kühlsystem (1) nach irgendeinem der vorhergehenden Ansprüche.

## Revendications

1. Système de refroidissement (1) monté sur une nacelle d'éolienne (101) configuré pour être monté sur une première face (5) d'une nacelle (101) d'une éolienne (100), la nacelle (101) étant reliée de manière rotatoire à une tour (102) de sorte que la nacelle (101) soit positionnée par rapport à une direction de vent (W), la première face (5) présentant une extension longitudinale correspondant sensiblement à la direction de vent (W), le système de refroidissement (1) comprenant :
une zone au vent projetée (10) lors du fonctionnement s'étendant sensiblement dans une direction perpendiculaire à partir de la première face (5), la zone au vent projetée (10) est définie par au moins un premier module de refroidissement (11) présentant une première zone de refroidissement (12),
**caractérisé en ce qu'**au moins une partie de la première zone de refroidissement (12) est agencée avec un angle (β) différent de 90 degrés par rapport à l'extension longitudinale de la première face (5) de la nacelle (101), et **en ce que**
la première face (5) présente une extension transversale (t) qui est perpendiculaire à l'extension longitudinale, le système de refroidissement (1) comprend un second module de refroidissement (14) présentant une seconde zone de refroidissement, le premier module de refroidissement (11) et le second module de refroidissement (14) étant agencés adjacents l'un à l'autre dans l'extension transversale (t), où la première zone de refroidissement (11) et la seconde zone de refroidissement définissent un V lorsqu'elles sont vues du dessus.

2. Système de refroidissement (1) monté sur une nacelle d'éolienne (101) selon la revendication 1, dans lequel la seconde zone de refroidissement est agencée avec un angle différent de 90 degrés par rapport à l'extension longitudinale de la première face (5) de la nacelle (101).

3. Système de refroidissement (1) monté sur une nacelle d'éolienne (101) selon la revendication 1 et/ou 2, dans lequel la première zone de refroidissement (12) et la seconde zone de refroidissement présentent une zone de refroidissement effective, la zone de refroidissement effective étant plus grande que la zone au vent projetée (10).

4. Système de refroidissement (1) monté sur une nacelle d'éolienne (101) selon la revendication 3, dans lequel la zone de refroidissement effective est 3 % plus grande que la zone au vent projetée (10), de préférence 5 % plus grande que la zone au vent projetée (10), plus préférentiellement 10 % plus grande que la zone au vent projetée (10), le plus préférentiellement plus de 15 % plus grande que la zone au vent projetée (10).

5. Système de refroidissement (1) monté sur une nacelle d'éolienne (101) selon l'une quelconque des revendications précédentes, dans lequel l'angle (β) est différent d'un plan qui est perpendiculaire à l'extension longitudinale de la première face (5) de la nacelle (101) avec entre 2 à 88 degrés, de préférence entre 5 à 75 degrés, plus préférentiellement entre 10 à 65 degrés. Le plus préférentiellement entre 15 à 55 degrés.

6. Système de refroidissement (1) monté sur une nacelle d'éolienne (101) selon la revendication 2, dans lequel l'angle de la première zone de refroidissement (12) et l'angle de la seconde zone de refroidissement définissent un angle mutuel entre la première zone de refroidissement (12) et la seconde zone de refroidissement.

7. Système de refroidissement (1) monté sur une nacelle d'éolienne (101) selon l'une quelconque des revendications précédentes, dans lequel une pluralité de modules de refroidissement (14) sont agencés adjacents les uns aux autres dans l'extension transversale de la première face (5).

8. Système de refroidissement (1) monté sur une nacelle d'éolienne (101) selon la revendication 6, dans lequel chaque module de refroidissement (14) présente une zone de refroidissement, chaque zone de refroidissement présentant un angle (β) différent de 90 degrés par rapport à l'extension longitudinale de la première face (5) de la nacelle (101).

9. Système de refroidissement (1) monté sur une nacelle d'éolienne (101) selon l'une quelconque des revendications précédentes, dans lequel un espace est créé entre deux modules de refroidissement adjacents (11, 14), dans lequel un module de refroidissement supplémentaire (14) est agencé dans l'espace.

10. Système de refroidissement (1) monté sur une nacelle d'éolienne (101) selon l'une quelconque des revendications précédentes, dans lequel chaque module de refroidissement (11, 14) est relié à un circuit de refroidissement configuré pour faire circuler un médium de refroidissement de sorte que le médium de refroidissement puisse s'écouler dans le module de refroidissement (11, 14) et le circuit de refroidissement.

11. Système de refroidissement (1) monté sur une nacelle d'éolienne (101) selon l'une quelconque des revendications précédentes, dans lequel le système de refroidissement (1) est un système de refroidissement passif (1).

12. Système de refroidissement (1) monté sur une nacelle d'éolienne (101) selon l'une quelconque des revendications précédentes, dans lequel l'angle (β) de la zone de refroidissement peut être ajusté en fonctionnement.

13. Système de refroidissement (1) monté sur une nacelle d'éolienne (101) selon l'une quelconque des revendications précédentes, dans lequel la première zone de refroidissement (12) présente une extension courbe, l'extension courbe présentant une pluralité de tangentes le long de l'extension courbe, chaque tangente définissant un angle qui est différent de 90 degrés par rapport à l'extension longitudinale de la première face (5) de la nacelle (101).

14. Éolienne présentant un système de refroidissement (1) selon l'une quelconque des revendications précédentes.
